# EUROPEAN PATENT APPLICATION

(11) **EP 2 468 553 A1**
(43) Date of publication of application: **27.06.2012**
(21) Application number: 10196270.2
(22) Date of filing: 21.12.2010
(51) Int. Cl.: B60K 6/36, B60K 6/40, B60K 6/48, B60K 6/365

(54) **A vehicle powertrain arrangement**

(71) Applicant: Saab Automobile AB, 461 80 Trollhättan (SE)
(72) Inventor: Björck, Per-Gunnar, 461 53, TROLLHÄTTAN (SE); Mohlin, Mikael, 442 32, KUNGÄLV (SE); Lord, John, 424 72, OLOFSTORP (SE); Hilmersson, Mats, 431 69, MÖLNDAL (SE)
(74) Representative: Haag, Malina Anna

(57) **Abstract**

The present invention relates to a vehicle powertrain arrangement, comprising a first vehicle propelling machine (101) having a first input shaft (112) and a second vehicle propelling machine (102) having a second input shaft (116), both of said vehicle propelling machines (101, 102) being coupled to a first output shaft (114). Said first vehicle propelling machine (101) is coupled to said first output shaft (114) via a first input gear set (180) and said second vehicle propelling machine (102) is coupled to said first output shaft (114) via a second input gear set (188), and said first (112) and second (116) input shafts are located in parallel with and each one at a respective distance from said first output shaft (114).

## Description

### Technical Field

The present invention relates to a vehicle powertrain arrangement, comprising a first vehicle propelling machine having a first input shaft and a second vehicle propelling machine having a second input shaft, both of said vehicle propelling machines being coupled to a first output shaft.

### Technical Background

Within the field of vehicle propulsion the trend is to provide a vehicle with several propulsion machines, of which one most often is an electric machine operated through batteries in order to reduce fuel consumption and carbon dioxide emissions. Having several propulsion machines and batteries means that a lot of space is needed to receive these within the available space in the vehicle. The available space is limited in a width dimension by the width of the vehicle reduced by wheels, chassis and any safety measures such as impact zones. In the height and length dimensions limitations are more set by the type of vehicle and the resulting weight.

A way to incorporate the complete propulsion engine in the vehicle is to use a part of a luggage boot and possibly space along the midsection of the vehicle passenger compartment, or even to use space underneath the vehicle to install the propulsion engine. This reduces the design options for the vehicle designer in terms of creative design and styling, and the available space for passengers and/or luggage is heavily decreased. This may in turn limit the number of possible buyers for the vehicle type.

A lot of effort is placed on the development of smaller sized, but more energy dense batteries, and on the technology of more efficient internal combustion engines and electrical motors. So far however, the propulsion engines are still large which makes their packaging difficult.

Also, a lot of effort is placed on the packaging of the propulsion machine in order to utilise the available space to the maximum. Propulsion machines in these types of hybrid electric vehicles most often are located one machine after the other in a linear manner in order to insert the power from each machine to the transmission axle and further to the differential. In *i.a.* a Toyota Prius the internal combustion engine is followed by the first motor/generator, which is followed by the transmission and the power transfer to the differential, and is further followed by the second motor/generator. The batteries are stored in the trunk of the vehicle.

There is thus a need to improve packaging of the engine.

### Summary of the Invention

The object is achieved according to a first aspect of the invention by a vehicle powertrain arrangement, comprising a first vehicle propelling machine having a first input shaft and a second vehicle propelling machine having a second input shaft, both of said vehicle propelling machines being coupled to a first output shaft. Said first vehicle propelling machine is coupled to said first output shaft via a first input gear set and said second vehicle propelling machine is coupled to said first output shaft via a second input gear set, and in that said first and second input shafts are located in parallel with and each one at a respective distance from said first output shaft.

An internal combustion engine generally has a camshaft which is located in line with a flywheel of a clutch, which clutch provides an input shaft and an input torque to a vehicle. An electric machine, working as generator and/or as a motor generally has an input shaft located centrally within the machine, and said input shaft is adapted to provide an input torque to a vehicle. By coupling said first vehicle propelling machine and said second vehicle propelling machine to said first output shaft via said first and second gear sets respectively, it is possible to translate or displace each respective input torques from said vehicle propelling machines such that each vehicle propelling machine may be positioned in relation to the other vehicle propelling machine and said first output shaft in a more compact manner than when positioned in a linear manner. Each respective distance from each input shaft for each vehicle propelling machine to the first output shaft may be adapted in order to provide an improved packaging ability. For instance the two vehicle propelling machines may be positioned alongside, rather than one after the other, as seen in relation to the first output shaft. Each respective input torque may thus be provided to the first output shaft, which may be operatively coupled to wheels of said vehicle to propel the vehicle. Hereby the vehicle powertrain arrangement may be better adapted to the available space in a vehicle engine compartment and consequently the vehicle may be less affected by the type of propulsion it is provided with.

According to an embodiment of the invention said first output shaft is coupled to a final gear set having a fourth output shaft and a differential which is connectable to wheels of a vehicle, wherein said fourth output shaft is located in parallel with and at a distance from said first output shaft.

Hereby an even more pronounced adjustability of the design options for the vehicle propulsion is achieved, since also the fourth output shaft and the differential may be located at a distance from the first output shaft.

According to an embodiment of the invention each one of said first input shaft, second input shaft and fourth output shaft are located within a respective one third of an arc of a circle around said first output shaft.

If looking at the vehicle powertrain arrangement from the first output shaft as viewpoint, said first input shaft, said second input shaft and said fourth output shaft may be located around the first output shaft.

According to an embodiment of the invention said first gear set comprises a first pair of meshing gear wheels and said second input gear set comprises a second pair of meshing gear wheels.

By arranging pairs of meshing gear wheels a simple and compact manner of introducing input torque to the vehicle powertrain arrangement is achieved.

According to an embodiment of the invention said first and second gear sets share a common gear wheel which is coupled to the first output shaft.

Input torque is consequently introduced from each vehicle propelling machine at a single point to the first output shaft.

According to an embodiment of the invention said first gear set further comprises a third pair of meshing gear wheels, of which one of said gear wheels is coupled to said first output shaft, such that said first and third pairs of gear wheels together form a first input gear set having two gears for said first vehicle propelling machine.

By providing two gears having each its own gear ratio for the first vehicle propelling machine it may be better operated such that an adaptation may be made of the machine speed in view of the load applied from the road on the vehicle. Thus better drivability and fuel economy may be achieved.

According to an embodiment of the invention said first output shaft further is coupled to a first output gear set having two gears.

Hereby selectable gears having gear ratios are achieved, hence improving drivability and fuel economy.

According to an embodiment of the invention said first output gear set is coupled to said first output shaft downstreams of said first input gear set, such that said first output gear set forms gears for both said first and second vehicle propelling machines.

In total four selectable gears are achieved, each having its own gear ratio, for the first vehicle propelling machine and two gears are achieved, each having its own gear ratio, for the second vehicle propelling machine.

According to an embodiment of the invention said first output gear set is a planetary gear set.

A planetary gear set is compact in its design which is advantageous when providing a vehicle with two vehicle propelling machines, and also enables to change gears without any disruption of momentum.

According to an embodiment of the invention said first output shaft forms a third input shaft to said first output gear set and wherein a fourth input shaft from said first output gear set is coupled to said final gear set.

According to an embodiment of the invention said fourth input shaft is journalled within said third input shaft.

An advantage is that the direction of the torque transferred through the third and fourth input shafts may be altered. The torque transferred through the third input shaft to the first output gear set may be directed in the opposite direction through the fourth input shaft such that the compactness and packaging of the vehicle powertrain arrangement may be further improved.

According to an embodiment of the invention said first output shaft in use is located transversely to a driving direction of a vehicle.

The available space in the compartment for the propelling machines is consequently best utilised taking also the measures of the components included in the vehicle powertrain arrangement into account.

According to an embodiment of the invention said first vehicle propelling machine is an internal combustion engine.

By providing at least 4 gears to the internal combustion engine, a sufficient drivability is provided to allow a pure engine mode of driving, useable e.g. if the vehicle is started after having been parked for a long time in cold weather with low powered batteries, or if driving under tough conditions, such as extremely hilly roads, where the electric machine may not be able to give sufficient power over time.

According to an embodiment of the invention said second vehicle propelling machine is an electric machine functioning both as motor and generator.

This vehicle propelling machine thus has two objectives. Thereby only one machine instead of two may be used and a more cost effective vehicle may be produced.

According to another aspect of the invention a vehicle is provided comprising a vehicle powertrain arrangement according to any on of the preceding claims.

### Description of the Drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Figure 1 schematically illustrates a gear arrangement for a hybrid electric vehicle according to the invention,
Figure 2 schematically illustrates an alternative gear arrangement for a hybrid electric vehicle according to the invention,
Figure 3 schematically illustrates the embodiment of Figure 2 in a partially cut top view, and
Figure 4 schematically illustrates the embodiment of Figures 2 and 3 in a side view.

### Detailed Description of Preferred Embodiments of the Invention

The present invention relates to vehicles in general, but more specifically to passenger cars of a size between two to nine passengers, including a driver. The present invention furthermore relates according to the preferred embodiments to vehicles being provided with two propelling machines 101, 102, of which one is an electric machine 102 and the other is an internal combustion enginge 101. The primary propulsion is provided by the electric machine 102, which is larger in size in terms of electrical effect than the internal combustion engine 101. However, the present invention also functions well in vehicles having two or more propelling machines of any kinds.

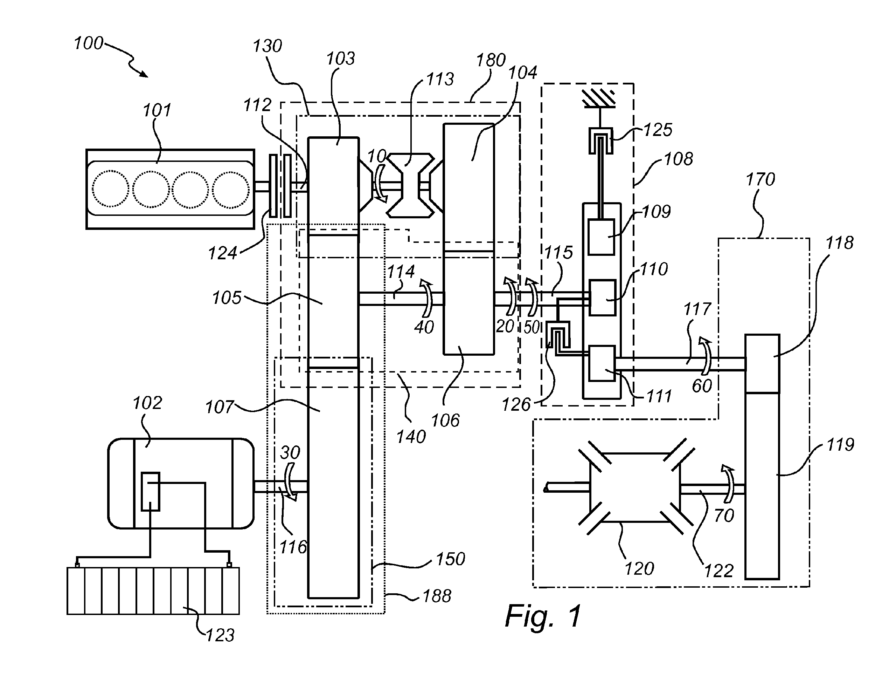

Figure 1 schematically illustrates a gear arrangement for a hybrid electric vehicle, such as a passenger car, which comprises a first input gear set 180, a second input gear set 188 and a first output gear set 108, wherein the first input gear set 180 is connected in series with said first output gear set 108. In more detail the first input gear set comprises a first input member 130, which is arranged to receive a first input torque 10 from an engine 101, such as an internal combustion engine (ICE). The first input gear set is further arranged to transmit the first torque to a first output member 140 of the first input gear set under a selectable first or second resulting gear ratio. In other words, the first output member 140 is arranged to receive a first output torque 20, which is equal to the first input torque being acted on by the first or second resulting gear ratio. In yet more detail, the first input member 130 comprises a first input shaft 112, as well as first input gear wheel 103 and a second input gear wheel 104 arranged on the input shaft. A moveable locking device 113 or a shift sleeve is provided on the shaft 112, for selectively engaging with the first and second input gear wheels 103, 104, and thereby selectively providing a locking engagement between the first input gear wheel and the first input shaft 112, and between the second input gear wheel and the first input shaft 112, respectively. The locking engagement between a gear wheel and a shaft translates a rotating motion of the gear wheel to the shaft. Furthermore, in order to be able to fully disconnect the ICR 101 from the vehicle powertrain arrangement, a launch clutch 124 is coupled between the ICE 101 and the first input gear set 180 on the first input shaft 112.

Moreover, the first output member 140 comprises a first output shaft 114, as well as first output gear wheel 105 and a second output gear wheel 106 arranged on the first output shaft 114. The first output gear wheel 105 meshes or engages with the first input gear wheel 103, and the second output gear wheel 106 meshes or engages with the second input gear wheel 104, respectively. Consequently, a first torque 10 received by the first input shaft 112 may be transmitted to the first output shaft either via the first input gear wheel 103 and the first output gear wheel 105, during which it is acted on by the first resulting gear ratio, or via the second input gear wheel 104 and the second output gear wheel 106, during which it is acted on by the second resulting gear ratio.

There are alternative ways of providing the first and second gear ratios, e.g. by use of a planetary gear set or by use of a continuously variable transmission (CVT). Turning to the second input gear set, it comprises a second input member 150, which is arranged to receive a second input torque 30 from an electric machine 102, such as an electric motor/generator. The electric motor/generator is electrically connected to an energy storage device 123 or battery, such that electric energy stored in the battery may be provided to the motor/generator and converted into a torque 30 provided to the second input member 150. The second input gear set is further arranged to transmit the second torque 30 to a second output member 140 of the second input gear set under a third resulting gear ratio. In other words, the second output member 140 is arranged to receive a second output torque 40 equal to the second input torque being acted on by the third resulting gear ratio. In yet more detail, the second input member 150 comprises a second input shaft 116, as well as third input gear wheel 107 arranged on the second input shaft. Moreover, the second output member 140 comprises a second output shaft 114, as well as a third output gear wheel 105 arranged on the second output shaft. The third output gear wheel 105 meshes or engages with the third input gear wheel 107. Consequently, a second input torque 30 received by the second input shaft 116 may be transmitted to the second output shaft via the second input gear wheel 107 and the second output gear wheel 105 during which it is acted on by the third resulting gear ratio.

Further, both first output shaft and the second output shaft 114 are connected to a third input shaft 115 of the first output gear set 108. According to one example, and as illustrated in Figure 1, the first and second output shafts and the third input shaft are one and the same. Moreover, the first output shaft and the second output shaft are also one and the same; as well as the first output gear wheel and the second output gear wheel, which are also one and the same.

Turning to the first output gear set 108, it comprises a third input member 115, which is arranged to receive a third input torque 50. The first output gear set 108 is further arranged to transmit the third input torque 50 to a third output member 170 of the first output gear set 108 under a fourth and fifth resulting gear ratio. In other words, the third output member 170 is arranged to receive a third output torque 60 equal to the third input torque 50 being acted on by the fourth or fifth resulting gear ratio. In yet more detail, the first output gear set 108 may be a planetary gear set, comprising a first, second and third node 109, 110, 111, wherein the first node 109 may be a ring gear, the second node 110 may be a sun gear, and the third node 111 a planetary carrier. The fourth gear ratio may be provided by locking the ring gear to a stationary member by means of a first clutch 125. The fourth gear ratio may be provided by locking the sun gear and the planetary carrier to each other by means of a second clutch 126, resulting in a fifth gear ratio equal to 1:1.

In more detail the third output member may have a final gear set, comprising a final input gear wheel 118 arranged on a fourth input shaft 117 being the same as the third output shaft, and a final output gear wheel 119 arranged on a fourth output shaft, wherein the final input gear wheel and the final output gear wheel meshes or engages with each other so as to transmit a rotating motion from the fourth input shaft to the fourth output shaft. The final input gear wheel 118 and the final output gear wheel 119 are arranged to provide a sixth gear ratio from the fourth input shaft 117 to the fourth output shaft 122 in the form of an output torque 70. The fourth output shaft is further connected to a differential 120. The differential 120 is adapted to be connected to wheels of the hybrid electric vehicle in a generally known manner.

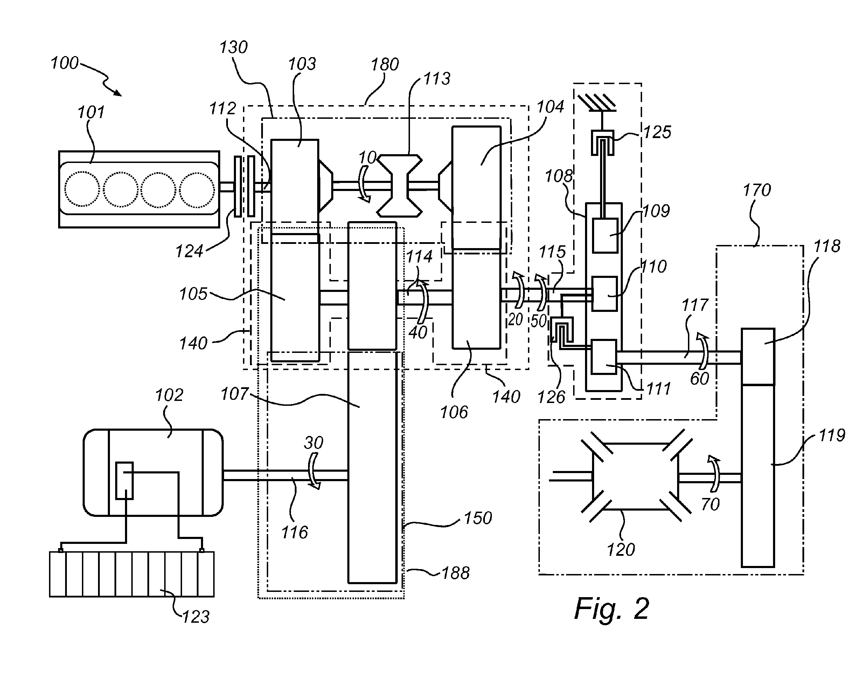

An alternative embodiment is schematically illustrated in Figure 2. The embodiment illustrated in Figure 2 is identical to the one described in relation to Figure 1, except that the third output gear wheel 208 and the first output gear wheel 105 are not one and the same. The third output gear wheel 208 is instead a separate gear wheel, arranged between the first output gear wheel 105 and the second output gear wheel 106 on the first output shat 114. The first output shaft being the same as the second output shaft. Consequently, the third input gear wheel does not engage with the first output gear wheel 105, but with the third output gear wheel 208.

The following description of e.g. different driving modes, all descriptions relate both to the gear arrangement described in relation to Figure 1 as well as the gear arrangement described in relation to Figure 2. In an pure electric mode of driving a second input torque 30 provided to the second input member may be transmitted to the third output member 170, via the second input gear wheel and the second output gear wheel 105 or 208, wherein the second input gear set acts on the second input torque by a resulting third gear ratio, thus providing a second output torque 40. Additionally, the first output gear set may be set to act on the second output torque by a fourth gear resulting ratio or a fifth resulting gear ratio, thus providing a third output torque 60 to the third output member 117. Consequently, there is provided two effective gears to the electric motor: one wherein the third and fourth resulting gears act on the second torque; and another wherein the third and fifth resulting gears act on the second torque.

In an pure engine mode of driving, a first input torque 10 provided to the first input member may be transmitted to the output member 170, via the first input gear wheel 103 and the first output gear wheel 105, wherein the first input gear set 180 acts on the first input torque 10 by a resulting first gear ratio, thus providing a first output torque 20. Alternatively, a first input torque 10 provided to the first input member 130 may be transmitted to the first output member 140, via the second input gear wheel 104 and the second output gear wheel 106, wherein the first input gear set acts on the first input torque 10 by a resulting second gear ratio. Additionally, the first output gear set 108 may be set to act on the first output torque by a resulting fourth gear ratio or a resulting fifth gear ratio, thus providing a third output torque 60 to the third output member 170. Consequently, there are provided four gears to the ICE: one wherein the first and fourth resulting gear ratios act on the first input torque; one wherein the second and fourth resulting gear ratios act on the first input torque; one wherein the first and fifth resulting gear ratios act on the first input torque and one wherein the second and fifth resulting gear ratios act on the first torque.

In the following description, these four gears are named first, second, third and fourth gear respectively in this order. Through the entire description the gear ratio is described as Uᵢₙ:Uₒᵤₜ, *i.e.* a numerically low gear ratio provides a low speed, but a high torque of the vehicle, and a numerically high gear ratio provides a high speed, but a low torque of the vehicle. Hence, the first gear provides the lowest gear ratio between the vehicle and the ground, and the second, third and fourth gears each provide a higher gear ratio between the vehicle and the ground, in this order, such that the fourth gear is the highest gear ratio. The first gear is adapted for starting propelling the vehicle from a stand-still, whereas the fourth gear is adapted for high speed continuous driving.

In a hybrid mode of operation, a first input torque 10 provided to the first input member 130 and a second input torque 30 provided to the second input member 150 may simultaneously be applied to the third output member 170 in a similar way as described in relation to the pure electric mode and the pure ICE mode above. In this mode the same resulting gear, i.e. the fourth or the fifth resulting gear, acts on both the electric machine and the engine.

In an ICE slip starting mode of operation, electric energy is converted by the electric machine 102 to a second input torque 20 provided to the second input member. The second torque is transferred to the first input member 130 and the first input shaft, via the second output gear wheel 105; 208, and the first or second input gear wheels 103, 104. Thereafter, the engine is started by slip clutch action, using a clutch 112 connecting the engine to the first input member 112.

In a charging mode of operation, the motor/generator acts as a generator. A first input torque 10 is provided to the first input member 130 and is transferred to the second input member 150 via the first input and output gear wheels 103, 105, or the second input and output gear wheels 104, 106; and thereafter via the third output and input gear wheels. The electric machine converts the torque or power received by the second input member to electric energy which is stored in the battery.

In a regenerative braking mode of operation, the motor/generator acts as a generator. A third torque is provided to the third output member 170 and is transferred to the third input member 115 and thereafter to the second input member 150 via the third output and input gear wheels. The electric machine converts the torque received by the second input member to electric energy which is stored in the battery.

The charging mode of operation and the regenerative braking mode of operation may be performed simultaneously.

The charging mode of operation may be performed simultaneously with the ICE driving mode of operation, by e.g. applying a suitable voltage to the electric machine. In other words, the third output member 170 receives a first torque 60 from the engine as described in relation to the ICE only driving mode of operation, simultaneously as the electric machine receives a second torque 30 from the engine as described in relation to the charging mode of operation. In other words, a first input torque 10 from the first input member is simultaneously transmitted to the third output member 170 as a first torque portion 60, and to the second input member as a second torque portion 30.

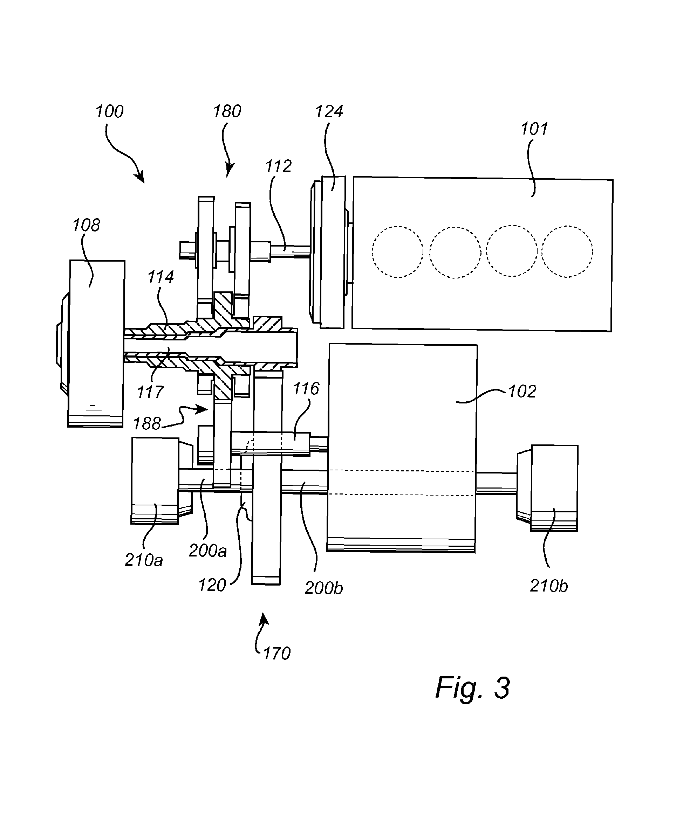

Now turning to Figure 3, in which the first and the second vehicle propelling machines 101, 102 are schematically disclosed in a top view when located in a manner in relation to each other and to the vehicle powertrain arrangement as a whole which is advantageous from a space requirement point of view. The vehicle powertrain arrangement is illustrated when it is installed in the engine compartment of a vehicle (not shown) and coupled to wheels (also not shown) of said vehicle. The electric machine is as already described connected to an energy storage device 123 or battery, which is shown only in Figures 1 and 2. The vehicle powertrain arrangement corresponds to the embodiment disclosed in Figure 2 above. The Figure 3 arrangement may just as well be adopted for the Figure 1 embodiment.

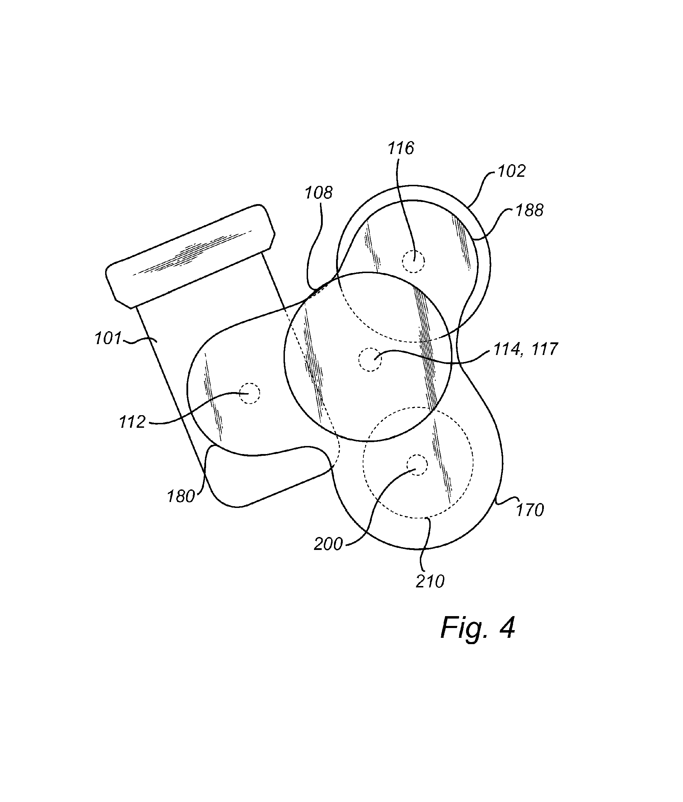

The vehicle comprises only two propulsion machines located alongside one another as seen in this view. It is further noted that the ICE 101 is located at a vertically lower level than the electric machine 102. This will be further disclosed in relation to Figure 4. The ICE 101 is located in line with the launch clutch 124, which transfers the first input torque 10 via the first input shaft 112 to the first input gear set 180. The electric machine 102 transfers the second input torque 30 via the second input shaft 116 to the second input gear set 188. Both the first input gear set 180 and the second input gear set 188 transfers each respective input torques 10, 30 to the first output shaft 114, which also is the same as the third input shaft 115 in the above description. Hereby a respective distance is achieved between the first input shaft 112 of the ICE 101 and the second input shaft 116 of the electric machine 102 to the first output shaft 114. These distances are means for achieving a good packaging capability for the vehicle powertrain arrangement in the engine compartment of the vehicle, since the machines 101, 102 may be located in a more compact manner in relation to the first output shaft 114. Not only may the vehicle powertrain arrangement be designed shorter in relation to known types, but also the volume around the first output shaft 114 may be better utilised.

The first output shaft 114 is further coupled to the planetary gear set 108. In this embodiment the input torque to the planetary gear set 108 is transferred through the planetary gear set 108 and transferred to the fourth input shaft 117, such that the fourth input shaft 117 is located on the same side of the planetary gear set 108 as the first output shaft 114. It is noted that the fourth input shaft 117 is the same as the third output shaft. Hereby an even greater compactness may be achieved. The fourth input shaft 117 may however be located on the opposite side of the planetary gear set 108 if better suited for the available vehicle compartment space. As can be seen from Figure 3 the fourth input shaft 117 is journalled within the first output shaft 114, such that the third output member 170 including the differential 120 is located on the same side of the planetary gear set 108 as both the two vehicle propelling machines 101, 102 and the first and second input gear sets 180, 188. It should be noted that the first output shaft 114 and the fourth input shaft 117 are shown for the sake of legibility in a cut manner. The first output shaft 114 and the fourth input shaft 117 are thus located concentrically to one another.

The third output member 170 including the differential 120 are in turn coupled to the driving axles 200a, 200b of the vehicle, to which driving axles 200 each drive shaft joint 21 0a, 210b and wheels (not shown) are coupled. The driving axles 200a, 200b correspond to the earlier described fourth output shaft 122. The differential 120 brings about a possibility for each wheel to rotate independently to the other in a known manner. The driving axles 200a, 200b have a left and right hand sided axle 200a, 200b, and the drive shaft joints 21 0a, 21 0b have a left and a right hand sided 21 0a, 21 0b joint.

A distance is also achieved from the first output shaft 114, and consequently the fourth input shaft 117, to the fourth output shaft 200a, 200b. This further improves the packaging capability for the vehicle powertrain arrangement. All shafts that have been described are located in parallel with one another. The only exception is the driving axles 200a, 200b, which have a location in relation to the vehicle powertrain arrangement which depend on the vehicle suspension and the load on the vehicle at each specific moment in time. They however have a general parallel relationship with the first output shaft 114 and the fourth input shaft 117.

Turning to Figure 4 the vehicle powertrain arrangement from Figure 2 and 3 is schematically shown in a side view. Here each distance from the first input shaft 112, the second input shaft 116 and the fourth output shaft 200 respectively, to the first output shaft 114 become clear. The electric machine 102 is located at the vertical top, the ICE 101 is located below said electric machine 102 and the fourth output shaft 200 with the differential 120 is located at the vertically lowest level. The first output shaft 114 and the fourth input shaft 117 are located in between these. It is advantageous to position the fourth output shaft 200 at this low level in order to transfer the torque from the propelling machines 101, 102 to the wheels of the vehicle at a vertically similar height as said wheels. From this side view it can be seen that each one of the first input shaft 112, the second input shaft 116 and the fourth output shaft 200 are located within a respective one third of an arc of a circle around the first output shaft 114. Other locations may however be contemplated based on the size and shape of the vehicle engine compartment and the vehicle propelling machines 101, 102. By providing the inventive opportunity as described above the vehicle engine compartment may be better utilised. The respective distances are depending at least on the size of the respective pairs of gear wheels in order to provide numerically beneficial gear ratios as minimum distances. Another factor influencing these distances are the size and shape of each vehicle propelling machine. The maximum distances are however generally depending on the size and shape of the vehicle engine compartment.

Within the scope of the present invention other embodiments may be contemplated. Such embodiments may be to have more than two vehicle propulsion machines. The concept according to the present invention is still applicable. The additional vehicle propulsion machine(s) may be located in a linear relationship with the first and the second vehicle propulsion machines 101, 102 in a known manner, but may also be located such that each one is provided with an input shaft which is coupled to the first output shaft 114 via an input gear set. In the latter case the input torque may be displaced in relation to the first output shaft 114 from the input shaft, such that a distance to the first output shaft 114 is achieved.

It is also contemplated that each input shaft is coupled to the first output shaft 114 via intermediate shafts in order to *i.a*. provide further gears, to bridge longer distances or for other reasons. Gears and gear ratios may also be provided by means of other gear set types than meshing gear wheels, such as continuously variable gear sets or belt-driven wheels of different sizes. Each one of said first and second input gear sets 180, 188 may be provided with further gears in order to optimise each propelling mode for the vehicle.

The two vehicle propulsion machines 101, 102 may also be located not only fully alongside one another, but merely partly alongside, or not at all overlapping as seen in relation to the first output shaft 114. They may also be arranged at similar vertical levels or at different levels as seen in relation to their respective input shafts 112, 116.

Although exemplary embodiments of the present invention have been described herein, it should be apparent to those having ordinary skill in the art that a number of changes, modifications or alterations to the invention as described herein may be made. Thus, the above description of the various embodiments of the present invention and the accompanying drawings are to be regarded as non-limiting examples of the invention and the scope of protection is defined by the appended claims. Any reference signs in the claims should not be construed as limiting the scope.

## Claims

1. A vehicle powertrain arrangement, comprising a first vehicle propelling machine (101) having a first input shaft (112) and a second vehicle propelling machine (102) having a second input shaft (116), both of said vehicle propelling machines (101, 102) being coupled to a first output shaft (114), **characterised in that** said first vehicle propelling machine (101) is coupled to said first output shaft (114) via a first input gear set (180) and said second vehicle propelling machine (102) is coupled to said first output shaft (114) via a second input gear set (188), and **in that** said first (112) and second (116) input shafts are located in parallel with and each one at a respective distance from said first output shaft (114).

2. A vehicle powertrain arrangement according to claim 1, wherein said first output shaft (114) is coupled to a final gear set (170) having a fourth output shaft (122) and a differential (120) which is connectable to wheels of a vehicle, wherein said fourth output shaft (122) is located in parallel with and at a distance from said first output shaft (114).

3. A vehicle powertrain arrangement according to claim 2, wherein each one of said first input shaft (112), second input shaft (116) and fourth output shaft (122) are located within a respective one third of an arc of a circle around said first output shaft (114).

4. A vehicle powertrain arrangement according to any one of claims 1 to 3, wherein said first gear set (180) comprises a first pair of meshing gear wheels (103, 105) and said second input gear set (188) comprises a second pair of meshing gear wheels (105, 107).

5. A vehicle powertrain arrangement according to claim 4, wherein said first (180) and second (188) gear sets share a common gear wheel (105) which is coupled to the first output shaft (114).

6. A vehicle powertrain arrangement according to any one of claims 4 to 5, wherein said first gear set (180) further comprises a third pair of meshing gear wheels (104, 106), of which one of said gear wheels is coupled to said first output shaft (114), such that said first (103, 105) and third (104, 106) pairs of gear wheels together form a first input gear set (180) having two gears for said first vehicle propelling machine (101).

7. A vehicle powertrain arrangement according to any one of the preceding claims, wherein said first output shaft (114) further is coupled to a first output gear set (108) having two gears.

8. A vehicle powertrain arrangement according to claim 7, wherein said first output gear (108) set is coupled to said first output shaft (114) downstreams of said first input gear set (180), such that said first output gear set (114) forms gears for both said first (101) and second (102) vehicle propelling machines.

9. A vehicle powertrain arrangement according to any one of claims 7 to 8, wherein said first output gear set (108) is a planetary gear set.

10. A vehicle powertrain arrangement according to any one of claims 7 to 9, wherein said first output shaft (114) forms a third input shaft (115) to said first output gear (108) set and wherein a fourth input shaft (117) from said first output gear set (108) is coupled to said final gear set (170).

11. A vehicle powertrain arrangement according to claim 10, wherein said fourth input shaft (117) is journalled within said third input shaft (115).

12. A vehicle powertrain arrangement according to any one of the preceding claims, wherein said first output shaft (114) in use is located transversely to a driving direction of a vehicle.

13. A vehicle powertrain arrangement according to any one of the preceding claims, wherein said first vehicle propelling machine (101) is an internal combustion engine.

14. A vehicle powertrain arrangement according to any one of the preceding claims, wherein said second vehicle propelling machine (102) is an electric machine functioning both as motor and generator.

15. A vehicle comprising a vehicle powertrain arrangement according to any on of the preceding claims.
